# EUROPÄISCHE PATENTSCHRIFT

(11) **EP 2 718 191 B1**
(45) Veröffentlichungstag und Bekanntmachung des Hinweises auf die Patenterteilung: **03.06.2015**
(21) Anmeldenummer: 13737559.8
(22) Anmeldetag: 25.06.2013
(51) Int. Cl.: B65B 39/00, B65B 3/32, B67C 3/20, G01F 11/02

(54) **LEBENSMITTEL-DISPENSERVORRICHTUNG SOWIE VERFAHREN ZUM PORTIONIEREN UND AUSGEBEN VON FLIESSFÄHIGEN LEBENSMITTELN**
FOOD DISPENSER, AND METHOD FOR PORTIONING AND DISPENSING FREE-FLOWING FOODS
DISPOSITIF DE DISTRIBUTION D'ALIMENT ET PROCÉDÉ DE MISE EN PORTIONS ET DE DISTRIBUTION D'ALIMENTS COULANTS

(30) Priorität: 28.06.2012 DE 102012105712
(43) Veröffentlichungstag der Anmeldung: 16.04.2014
(73) Patentinhaber: Unifiller Systems UK Ltd., Northampton NN3 6HZ (GB)
(72) Erfinder: BUCHER, Benno, Delta, BC V4L 1E8 (CA); KURSCHNER, Kuno, Delta, BC V4L 1K5 (CA)
(74) Vertreter: Wagner, Kilian
(86) Internationale Anmeldenummer: PCT/EP2013/063216
(87) Internationale Veröffentlichungsnummer: WO 2014/001296

(56) Entgegenhaltungen:
- EP-A1- 0 279 409
- DE-A1- 3 838 462
- US-A1- 2004 129 338

## Beschreibung

Die Erfindung betrifft eine Lebensmittel-Dispenservorrichtung gemäß dem Oberbegriff des Anspruchs 1 sowie ein Lebensmittel-Portionier- und Ausgabeverfahren gemäß Anspruch 16.

In der Lebensmittelindustrie werden sogenannte Lebensmittel-Dispenser eingesetzt, um fertige Lebensmittelprodukte oder Zutaten aus einem Vorrat zu portionieren und die Portion auszugeben. Derartige Dispenser-Vorrichtungen werden auch in Großküchen, Bäckereien und in der Süßwarenproduktion, insbesondere in Konditoreien, eingesetzt. Mit bekannten Dispenser-Vorrrichtungen lassen sich neben Teigen beispielsweise auch gekochte Nudeln, Suppen, Massen, wie aufgeschäumte Schlagsahne oder Glasierungen oder auch Fleisch portionieren und ausgeben.

Bekannte Lebensmittel-Dispenservorrichtungen umfassen einen in der Regel pneumatisch angetriebenen Kolben, der dazu dient, bei einem ersten Arbeitshub Lebensmittel in einen Zylinder anzusaugen und bei einem zweiten, entgegengesetzt gerichteten Hub das Lebensmittel auf das angesaugte Volumen portioniert auszugeben. Dem Kolben ist ein Ventil zugeordnet, das bei dem ersten Hub eine Verbindung zwischen einer Ansaugöffnung und einer dem Kolben zugeordneten Arbeitsöffnung herstellt und welches diese Verbindung vor Beginn des Gegenhubs schließt und gleichzeitig eine Verbindung zwischen der Arbeitsöffnung und einer Ausgabeöffnung herstellt.

Hinsichtlich der Wirkweise des zum Einsatz kommenden Ventils gibt es bislang zwei unterschiedliche Konzepte.

Das älteste bekannte Konzept besteht darin, einen im wesentlichen zylindrisch konturierten Ventilkörper zwischen zwei Schaltstellungen zu rotieren, wobei sich in diesem Fall die Ansaugöffnung, die Arbeitsöffnung und die Ausgabeöffnung an um 90° zueinander versetzten Umfangspositionen eines Ventilgehäuses befinden, jedoch auf der gleichen Axialposition.

Nach dem vorgenannten Prinzip arbeitende Lebensmittel-Dispenser sind in den US-Druckschriften US 2,032,163 A, US 5,127,547 sowie US 5,441,173 beschrieben.

Daneben wird von der Anmelderin ein Lebensmittel-Dispenser hergestellt, und vertrieben, bei dem der Ventilkörper nicht rotierbar, sondern lediglich axial translatorisch zwischen den zwei Schaltstellungen verschiebbar ist. Auch bei einer derartigen Ventilkonfiguration befinden sich die Ansaugöffnung, die Arbeitsöffnung und die Ausgabeöffnung um 90° zueinander versetzt auf der gleichen Axialposition eines den Ventilkörper umschließenden Ventilgehäuses.

Es bestehen Bestrebungen, die Arbeitssicherheit bei Lebensmittel-Dispensern zu Erhöhen, etwa für den Fall, dass ein Benutzer unbeabsichtigt mit einem Finger in eine der vorgenannten Öffnungen während des Betriebs der Vorrichtung hineingreift. Darüber hinaus soll das Lebensmittel möglichst schonend gefördert werden.

Aus der DE 38 38 462 A1 ist eine Vorrichtung zum dosierten Abfüllen von fließfähigen Produkten bekannt, wobei die Vorrichtung im Gegensatz zu einer gattungsgemäßen Vorrichtung einen nicht nur rein rotatorisch bewegbaren Ventilkörper aufweist - der Ventilkörper der bekannten Vorrichtung ist auch translatorisch verstellbar, was vermieden werden soll. Nachteilig bei der bekannten Vorrichtung ist die erhebliche Verletzungsgefahr bei einer Rotation des Ventilkörpers durch Abscheren von Fingern im Bereich der Öffnungen.

Aus der US 2004/0129338 A1 ist ebenfalls eine Dosiervorrichtung bekannt, bei welcher eine erhebliche Verletzungsgefahr gegeben ist.

Ausgehend von dem vorgenannten Stand der Technik liegt der Erfindung die Aufgabe zugrunde, einen verbesserten Lebensmittel-Dispenser anzugeben. Bevorzugt soll der Lebensmittel-Dispenser derart ausgestaltet sein, dass ein Verletzungsrisiko minimiert ist. Ferner besteht die Aufgabe darin, ein Verfahren zum Betreiben eines derartig verbesserten Lebensmittel-Dispensers anzugeben.

Diese Aufgabe wird hinsichtlich der Lebensmittel-Dispenservorrichtung mit den Merkmalen des Anspruchs 1 und hinsichtlich des Verfahrens mit den Merkmalen des Anspruchs 16 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Die Erfindung hat erkannt, dass es zur Erhöhung der Arbeitssicherheit nicht zielführend wäre, die außen an die Öffnungen anschließenden Leitungen bzw. Kanäle zu verlängern, um zu verhindern, dass ein Benutzer mit seinen Fingern in den Bereich des Ventilkörpers fassen kann, da hierdurch insbesondere die Saugleistung deutlich reduziert würde. Besonders problematisch wäre es, die Leitung zwischen einem vorzugsweise vorgesehenen Lebensmittel-Vorratsbehälter, beispielsweise einem Tank oder einem Trichter und der Ansaugöffnung zu verlängern, da hierdurch die im Bezug auf das Arbeitsvermögen kritische Ansaugstrecke verlängert würde.

Die Erfindung bestreitet einen anderen Weg unter Beibehaltung des Rotationsprinzips des Ventilkörpers. Anders ausgedrückt ist auch bei der erfindungsgemäßen Dispenser-Vorrichtung der Ventilkörper ausschließlich rotierbar angetrieben, um zwischen den zwei Schaltstellungen verstellt zu werden. Hierdurch ist ein Schaltvorgang mit vergleichsweise geringen Antriebskräften möglich. Eine Axialverstellung des Ventilkörpers findet nicht statt. In Abkehr von dem genannten Stand der Technik befinden sich die Ansaugöffnung, die Arbeitsöffnung und die Ausgabeöffnung nicht mehr auf der gleichen Axialposition, sondern sind entlang der Rotationsachse des Ventilkörpers versetzt angeordnet, insbesondere derart, dass die Flächenschwerpunkte (Flächenzentren) der Querschnittsflächen von Ansaugöffnung, Arbeitsöffnung und Ausgabeöffnung in Richtung der Rotationsachse beabstandet sind. Besonders bevorzugt ist eine Ausführungsform der Dispenser-Vorrichtung, nach welcher vorgenannte Öffnungen entlang der Rotationsachse beabstandet sind.

Diese erfindungsgemäße Gestaltung des Dispenser-Ventils ist zunächst überraschend, da der axiale Versatz der Öffnungen ausschließlich durch Rotation und ausdrücklich nicht durch Axialverstellung des Ventilkörpers bei einer Verstellung des Ventilkörpers zwischen seinen beiden Schaltstellungen überwunden werden muss. Anders ausgedrückt müssen die Lebensmittelkanäle des Ventils (Fluidverbindungen) so geometrisch geschaffen sein, dass diese trotz einer ausschließlich rotatorischen Verstellung des Ventilkörpers zwischen den Schaltstellungen einen axialen Versatz der Öffnung überwinden, wobei es besonders bevorzugt ist, wenn dies dadurch realisiert ist, dass sich zumindest ein eine Fluidverbindung bildender, als Nut ausgebildeter Kanal, vorzugsweise beide dann jeweils als Nut ausgebildeten Kanäle, sich gleichzeitig in axialer und in Umfangsrichtung erstreckt bzw. erstrecken, insbesondere derart, dass zumindest eine Seitenwand zumindest eines Kanals kontinuierlich bzw. gleitend (vorzugsweise gleichzeitig aus axialer sowie aus umfänglicher Richtung) mit der zugehörigen Öffnung des Kanals bei einer Rotation des Ventilkörpers in Überdeckung kommt und dabei einen gegebenenfalls im Öffnungsbereich befindlichen Finger verschiebt, so dass der Benutzer ausreichend Zeit hat, diesen Herauszuziehen. Insgesamt kann durch die Erfindung der Kontakt eines Benutzers mit den schneidenden bzw. abscherenden Bereichen des Ventilkörpers zumindest weitgehend vermieden werden.

Eine derartige Konfiguration bietet auch den Vorteil, das stückige, fließfähig, d.h. ansaugbare bzw. mit dem Dispenser förderbare Lebensmittel beim Wechsel zwischen den Schaltstellungen in einem geringeren Umfang abgeschert werden, wie dies im Stand der Technik der Fall ist.

Durch die axial versetzte, insbesondere beabstandete Anordnung der Öffnungen müssen sich die Kanäle, von denen mindestens einer als Nut ausgebildet ist, wie vorerwähnt, bevorzugt gleichzeitig in axialer als auch in Umfangsrichtung erstrecken. Dies führt dazu, dass die Kanäle trotz einer ausschließlich rotatorischen Bewegung des Ventilkörpers zwischen den Schaltstellungen sich in Bezug auf die den Kanälen zugeordneten Öffnungen in einer kombinierten rotatorischen und translatorischen Bewegung verstellen, wodurch im Wesentlichen die Reduzierung der Verletzungsgefahr erreicht wird. Dies führt auch bevorzugt dazu, dass die abscherend wirkenden Kanalenden bzw. die diesen Enden zugeordneten Kanalwände, die den Kanal in Bezug auf seine Längserstreckung begrenzen, abschnittsweise, jedenfalls die nicht parallel zur Rotationsachse verlaufenden Konturabschnitte (Scherkonturabschnitte) der, bevorzugt bogenförmig konturierten Kanalenden, ebenfalls nur in einer kombinierten translatorischen/rotatorischen Bewegung mit der jeweils zugeordneten Öffnung in Überdeckung kommen, wodurch die Verletzungsgefahr weiter reduziert wird.

Anders ausgedrückt ist es bevorzugt, wenn die Kanalenden bzw. später noch zu erläuternde Nutenden zumindest abschnittsweise, insbesondere größtenteils nicht parallel zur Rotationsachse verlaufen, sondern beispielsweise bogenförmig bzw. gekrümmt konturiert sind, damit aus einer reinen Rotationsbewegung des Ventilkörpers bezüglich der auf die Kanal- bzw. Nutenden relativ zu der jeweils zugeordneten Öffnung eine kombinierte rotatorische und translatorische (Relativ-)Bewegung resultiert, um die Verletzungsgefahr weiter zu minimieren.

Im Hinblick auf die geometrische Gestaltung der die Fluidverbindungen bildenden Kanäle gibt es unterschiedliche Möglichkeiten. Erfindungsgemäß ist vorgesehen, dass zumindest eine, die zugehörige Fluidverbindung in axialer Richtung begrenzende Seitenwand eines als Nut ausgebildeten Kanals, bezogen auf die Längserstreckung der Rotationsachse schräg, insbesondere gekrümmt, erstreckt, bzw. schräg d.h. nicht senkrecht verläuft, und dabei eine zumindest näherungsweise helikale Bahn beschreibt. Besonders bevorzugt ist es, wenn zumindest eine die jeweilige Nut in axialer Richtung begrenzende Seitenwand jeder Nut (für den fakultativen Fall der Ausbildung beider Kanäle als außen offene Nuten) einen entsprechenden Konturverlauf aufweist. Noch weiter bevorzugt ist es, wenn bei zumindest einer Nut beide einander gegenüberliegende, vorzugsweise parallel verlaufende Seitenwände eine entsprechende Kontur beschreiben bzw. einer entsprechende Bahn folgen. Ganz besonders bevorzugt verläuft eine Mittelachse zumindest einer Nut, insbesondere die Mittelachsen beider Nuten (für den fakultativen Fall des Vorsehens zweier Nuten) sowohl in axialer als auch in Umfangsrichtung und ist bzw. sind weiter bevorzugt helikal konturiert. Unter der Mittelachse wird dabei eine Achse bzw. Längserstreckungsrichtung der Nut verstanden, die die Flächenzentren bzw. Flächenschwerpunkte von in Richtung der Längserstreckung des bzw. der Kanäle hintereinander folgenden Nut-Querschnittsflächen miteinander verbindet.

Eine vorstehende schräge, insbesondere geschwungene Konfiguration der Kanäle bzw. Fluidverbindungen in Bezug auf die Längserstreckung des Ventilkörpers ist auch bei einer Ausführungsform realisierbar, bei welcher sich die Ansaugöffnung, die Arbeitsöffnung und die Ausgabeöffnung trotz ihres Axialversatzes auf der gleichen Umfangsposition befinden. Besonders bevorzugt ist es jedoch, wenn zumindest zwei der vorgenannten Öffnungen, insbesondere sämtliche drei Öffnungen in Umfangsrichtung versetzt zueinander angeordnet sind, insbesondere derart, dass ihr Querschnitts-Flächenschwerpunkt in Umfangsrichtung beabstandet ist. Ganz besonders bevorzugt ist eine Ausführungsform, bei der zumindest zwei der vorgenannten Öffnungen, insbesondere sämtliche vorgenannten Öffnungen in der Umfangsrichtung beabstandet sind, wobei es noch weiter bevorzugt ist, wenn jeweils zwei der vorgenannten Öffnungen in die Umfangsrichtung um 90° versetzt sind. Eine derartige Konfiguration ermöglicht in besonders vorteilhafter Weise einen sich in axialer sowie in Umfangsrichtung erstreckenden Verlauf zumindest einer der Kanäle, insbesondere beider Kanäle, was zu einer minimierten Verletzungsgefahr und zu einer geringeren Lebensmittelscherung führt.

Ganz besonders bevorzugt ist eine Ausführungsform des Ventils der Dispenservorrichtung, bei der ein geringer Schaltweg des Ventilkörpers zwischen den beiden Schaltstellungen eingehalten wird, wobei es besonders zweckmäßig ist, wenn die drei Öffnungen so relativ zueinander angeordnet sind, dass der Ventilkörper um weniger als 180°, vorzugsweise deutlich weniger als 180° zwischen den beiden Schaltstellungen verstellt werden muss. Besonders zweckmäßig ist es, wenn der Ventilkörper einen Umfangswinkel von 120° oder weniger zurücklegen muss, ganz besonders bevorzugt von 90° oder weniger. Ein zurückzulegender Umfangswinkel von 90° ist besonders vorteilhaft für eine bevorzugte Weiterbildung der Erfindung, nach welcher der Ventilkörper in der Art eines Kurbeltriebs mittels eines gelenkig mit dem Ventilkörper verbundenen Hebels verstellt wird, wobei dieser Hebel pneumatisch angetrieben sein kann, hydraulisch oder mittels eines elektrischen Stellmotors, wobei jedoch ein pneumatischer Antrieb aus Robustheitsgründen bevorzugt ist.

Im Hinblick auf die Anordnung der Ansaugöffnung, der Arbeitsöffnung und der Auslassöffnung gibt es unterschiedliche Möglichkeiten. Besonders zweckmäßig und bevorzugt ist eine Ausführungsform, bei der sämtliche drei Öffnungen mantelseitig in dem den Ventilkörper aufnehmenden Ventilgehäuse angeordnet sind. Auch ist es möglich, eine der Öffnungen beispielsweise stirnseitig in dem Ventilgehäuse anzuordnen und vorzugsweise die anderen beiden Öffnungen mantelseitig. Als besonders zweckmäßig hat es sich erwiesen, die Arbeitsöffnung axial zwischen der Ansaug- und der Auslassöffnung anzuordnen.

Bisher war ausschließlich von einer Ansaugöffnung, einer Arbeitsöffnung und einer Auslassöffnung die Rede, die über das Ventil geeignet miteinander verbunden werden können. Eine Ausführung der Dispenser-Vorrichtung mit jeweils einer der vorgenannten Öffnungen ist die einfachste Ausführungsform. Alternativ ist es möglich mehrere Gruppen mit jeweils den vorgenannten drei Öffnungen vorzusehen und axial hintereinander anzuordnen, wobei vorzugsweise für mindestens zwei solcher Gruppen ein gemeinsamer Ventilkörper vorgesehen ist, bevorzugt für sämtliche. Eine Anordnung mit mehreren Gruppen weist mehrere in axialer Richtung beabstandete, bevorzugt parallele mit bevorzugt und jeweils einer Arbeitsöffnung zusammenwirkende Kolben auf. Ist nur eine einzige Gruppe vorgesehen, ist es besonders bevorzugt, wenn das Ventilgehäuse in dem axial dem freien Ende des Ventilkörpers gegenüberliegenden stirnseitigen Bereich geschlossen ausgebildet ist oder alternativ eine der vorgenannten Öffnungen aufweist. Jedenfalls erlaubt es eine derartige Konfiguration den Ventilkörper gegenüber dem Ventilgehäuse mittels mindestens einer Ringdichtung aus Elastomermaterial ausschließlich in einem axialen Bereich zwischen der vorgenannten Gruppe von Öffnungen und dem antriebsseitigen Ende des Ventilkörpers abzudichten.

Insbesondere ist auch der von dem antriebsseitigen Ende abgewandten Seite der Gruppe von Öffnungen keine Ringdichtung aus einem Elastomermaterial vorgesehen, da dies nicht notwendig ist, im Vergleich zu den Dispenser-Vorrichtungen aus dem Stand der Technik. Für den Fall des Vorsehens mehrerer axial benachbarter Gruppen von Öffnungen kann bei Bedarf zwischen zwei benachbarten Gruppen von Öffnungen eine Ringdichtung vorgesehen sein - dies ist jedoch nicht zwingend notwendig oder erwünscht. Weiterbildungsgemäß ist jedenfalls auf der von dem antriebsseitigen Ende des Ventilkörpers abgewandten Ende der axial am weitesten von dem Antrieb entfernten (endseitigen) Öffnungsgruppe bevorzugt keine Ringdichtung vorgesehen. Bei sämtlichen vorgenannten Ausgestaltungsvarianten des Ventils (mit einer oder mehreren Öffnungsgruppen) ist es bevorzugt, wenn der Ventilkörper mit seinem freien, d.h. von dem antriebsseitigen Ende abgewandten Ende in dem Ventilgehäuse endet, welches bevorzugt, wie bereits erwähnt, endseitig geschlossen ist, also eine Sacklochöffnung aufweist, in die der Ventilkörper eingeführt ist. Alternativ ist an der endseitigen Stirnseite eine von den drei Öffnungen, insbesondere die Auslassöffnung oder die Ansaugöffnung vorgesehen. Bevorzugt ist bei beiden Ausführungsformen ausschließlich mindestens eine Ringdichtung im Bereich des antriebsseitigen Endes vorgesehen.

Um bei dem Ansaugschritt des Kolbens eine Ansaugen von Lebensmitteln aus der Auslassöffnung und in der zweiten Schaltstellung bei einem Ausgabehub des Kolbens eine Ausgabe von Lebensmitteln durch die Ansaugöffnung zu vermeiden, ist weiterbildungsgemäß vorgesehen, dass in der ersten Schaltstellung die Arbeitsöffnung nicht fluidleitend mit der Auslassöffnung verbunden ist und/oder in der zweiten Schaltstellung die Arbeitsöffnung nicht fluidleitend mit der Ansauföffnung.

Grundsätzlich ist es möglich, die erste oder die zweite Fluidverbindung als umfangsgeschlossene Bohrung bzw. als umfangsgeschlossener Durchbruch bzw. Kanal im Ventilkörper auszubilden. Erfindungsgemäß ist vorgesehen, die erste und/oder die zweite Fluidverbindung, d.h. den ersten und/oder zweiten Kanal als außen in Richtung Ventilgehäuse offene Nut im Ventilkörper auszubilden, wobei Nuteinlauf und -auslauf der jeweiligen Nut in axialer Richtung versetzt, insbesondere beabstandet sind. Ganz besonders zweckmäßig ist es nun, wenn ein vorzugsweise der Arbeitsöffnung zugeordnetes Nutende der ersten Nut und ein vorzugsweise ebenfalls der Arbeitsöffnung zugeordneter Nutanfang der zweiten Nut zur alternativen Wechselwirkung mit der Arbeitsöffnung auf der gleichen Axialposition angeordnet, jedoch in Umfangsrichtung beabstandet sind, insbesondere um einen in Umfangsrichtung gemessenen Abstand von mindestens 5mm, vorzugsweise von mindestens 1 cm, ganz besonders bevorzugt beträgt dieser Abstand mindestens den Durchmesser der Arbeitsöffnung in Umfangsrichtung.

Wie eingangs erwähnt ist es gemäß der Erfindung vorgesehen, dass sich zumindest einer der Kanäle, vorzugsweise beide Kanäle bei einer reinen Rotationsbewegung des Ventilkörpers, bezogen auf die ihnen zugeordneten Öffnungen, eine kombinierte, rotatorische sowie translatorische Bewegung ausführen, trotz einer reinen Rotationsbewegung des Ventilkörpers. Im Falle der Ausbildung zumindest einer der Kanäle als Nut, bewegt sich demzufolge dann die mindestens eine Nut, vorzugsweise beide Nuten, relativ zu den dieser zugeordneten Öffnungen bei einer reinen Drehbewegung des Ventilkörpers kombiniert rotatorisch sowie translatorisch (rotatorisch in Umfangsrichtung um die Rotationsachse und translatorisch in Bezug auf die Längserstreckung des Ventils). Bevorzugt bewegt sich in einer solchen kombinierten rotatorischen und translatorischen Bewegung auch mindestens ein Nutende der mindestens einen Nut, vorzugsweise beide Nutenden, insbesondere beider Nuten in einer rotatorischen und translatorischen Bewegung relativ zu der dem jeweiligen Nutende zugeordneten Öffnung. Die Nutenden, die die Nuten im Wesentlichen quer zur Längserstreckung der jeweiligen Nut begrenzen, bilden die Kanal bzw. Nutenden, die im Enddefekt bei ihrer Verstellbewegung das größte Gefahrenpotenzial darstellen. Durch die kombinierte rotatorische und translatorische Bewegung der Kanalenden bzw. Nutenden, genauer der sich nicht parallel zu der Rotationsachse erstreckenden Konturabschnitte (Scherkanten) der Kanal- bzw. Nutenden relativ zu der jeweils zugeordneten Öffnung, ergibt sich also eine Schrägbewegung bzw. Verschiebebewegung in Bezug auf die jeweilige Öffnung, so dass die Verletzungsgefahr deutlich reduziert wird.

Gemäß einer besonders einfachen Ausgestaltung des Ventilkörpers ist vorgesehen, dass vorzugsweise eine endseitige Fluidverbindung von einer insbesondere abgeschrägt angeordneten oberen Stirnseite des Ventilkörpers begrenzt ist. Anders ausgedrückt liegt die Stirnseite des Ventilkörpers bevorzugt in einer Ebene, die unter einem von 90° abweichenden Winkel von der Rotationsachse geschnitten ist.

Besonders bevorzugt ist es, wenn ein endseitiger Kanal bezogen auf das von dem antriebsseitigen Ende abgewandte Ende des Ventilkörpers auf der einen, dem Antrieb zugewandten Seite von dem Ventilkörper und auf der gegenüberliegenden Axialseite von der, vorzugsweise geschlossenen, oder eine der Öffnungen aufweisenden Stirnseite des Ventilgehäuses begrenzt ist. Dabei ist es besonders zweckmäßig, wenn dieser endseitige Kanal auf der Ventilkörperseite von einem Wendelabschnitt des Ventilkörpers begrenzt ist, der vorzugsweise zumindest abschnittsweise nur auf der dem Antriebsende des Ventilkörpers zugewandten Seite eine vom Ventilkörper gebildete, insbesondere gewendelte Seitenwand aufweist. Der Wendelabschnitt ist bevorzugt zumindest abschnittsweise vollumfänglich beabstandet vom Innenumfang des Ventilgehäuses. Anders ausgedrückt ist es bevorzugt, wenn ein endseitiger Kanal abschnittsweise nur auf der dem Antrieb des Ventilkörpers zugewandten Seite von einer von dem Ventilkörper gebildeten, gewendelten Seitenwand begrenzt ist. Axial gegenüberliegend wird die Fluidverbindung bzw. der Kanal bevorzugt, zumindest abschnittsweise von der inneren Stirnseite des Ventilgehäuses begrenzt.

In Weiterbildung der Erfindung ist mit Vorteil vorgesehen, dass der Ventilkörper derart ausgebildet und relativ zu der Ausgabeöffnung und/oder der Ansaugöffnung angeordnet ist, dass der Ventilkörper die Ansaugöffnung oder die Ausgabeöffnung in keiner seiner Schaltstellungen und vorzugsweise auch nicht auf seinem Weg zwischen den Schaltstellungen vollständig verschließt bzw. überdeckt. Dies kann beispielsweise dadurch realisiert werden, dass der Ventilkörper, insbesondere mit einem vorerwähnten Wendelabschnitt, vor dem axialen Ende der betreffenden Öffnung auf einer von dem antriebsseitigen Ende abgewandten Ende des Ventilkörpers endet. Es ist aber auch möglich, dass der Ventilkörper im Bereich der betreffenden Öffnung eine, bevorzugt vollumfängliche, Durchmesserreduzierung aufweist, also, bevorzugt vollumfänglich, radial vom Innenumfang des Ventilgehäuses beabstandet ist, so dass ein vollständiges Überdecken der entsprechenden Öffnung von innen her vermieden wird. Letztgenannte Ausführung ist insbesondere auch dann realisierbar, wenn mit dem Ventilkörper gleichzeitig mehrere Dreiergruppen von Öffnungen geschaltet werden. Dadurch, dass die Ansaugöffnung und/oder die Ausgabeöffnung, insbesondere die Ansaugöffnung, nicht vollständig von dem Ventilkörper bzw. einer entsprechend konturierten Mantelfläche des Ventilkörpers überdeckt werden kann, wird die Verletzungsgefahr weiter reduziert.

Die Erfindung führt auch auf ein Verfahren zum Portionieren und Ausgeben von fließfähigen Lebensmitteln unter Verwendung einer erfindungsgemäßen Dispenser-Vorrichtung, wobei unter fließfähigen Lebensmitteln sämtliche Lebensmittel verstanden werden, die mit einer erfindungsgemäßen Vorrichtung förderbar sind.

Insbesondere sollen die Lebensmittel gleitfähig sein, wie beispielsweise gekochte Nudeln, Eintöpfe oder auch Fleischstücke. Die Größe bzw. das Volumen der zu dosierenden bzw. auszugebenden Portion kann durch die Einstellung des Hubweges des Kolbens variiert werden.

Gemäß dem erfindungsgemäßen Verfahren wird mittels des Kolbens in der ersten Schaltstellung des Ventils die Ansaugöffnung angesaugt und dann über die erste Fluidverbindung in axialer Richtung zur Arbeitsöffnung transportiert und gelangt durch diese hindurch in einen, vorzugsweise von einem dem Kolben zugeordneten Zylinder begrenzten Zwischenraum. In der zweiten Schaltstellung, zu deren Erreichen der Ventilkörper rotiert werden muss, gelangt das Lebensmittel durch die Arbeitsöffnung in die zweite Fluidverbindung und strömt über diese in axialer Richtung hin zur Ausgabeöffnung und durch diese hindurch.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: in einer Explosionsdarstellung ausschnittsweise eine Lebensmittel-Dispenservorrichtung, umfassend ein Dispenser-Ventil mit einem Ventilgehäuse und einem darin ausschließlich rotierbar angetriebenen Ventilkörper,
- Fig. 2:: das Ventilgehäuse gemäß Fig. 1 mit darin angeordnetem Ventilkörper gemäß Fig. 1,
- Fig. 3:: den Ventilkörper gemäß den Fig. 1 und 2 in Alleinstellung und
- Fig. 4a bis Fig. 4f:: unterschiedliche Darstellungen des Ventilkörpers gemäß den Fig. 1 und 2.

In den Figuren sind gleiche Elemente und Elemente mit der gleichen Funktion mit den gleichen Bezugszeichen gekennzeichnet.

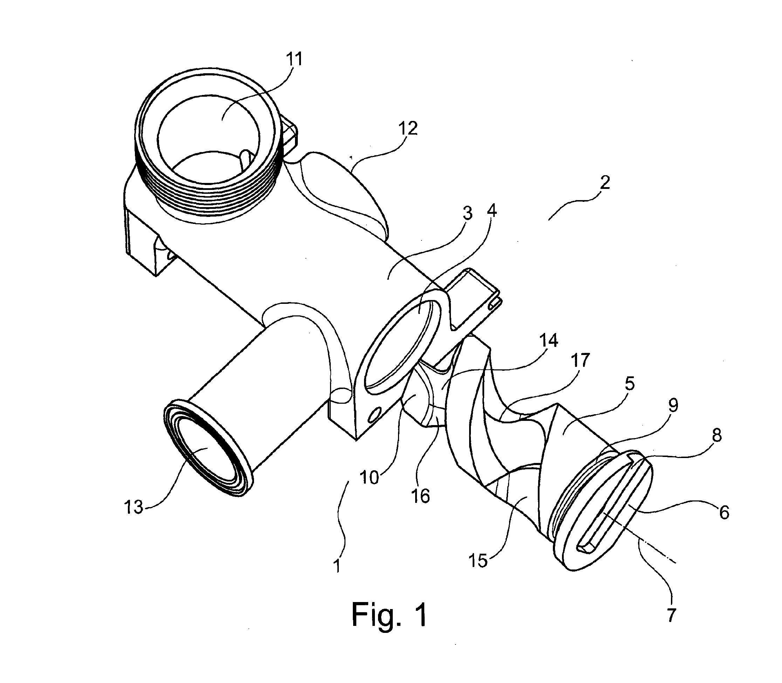

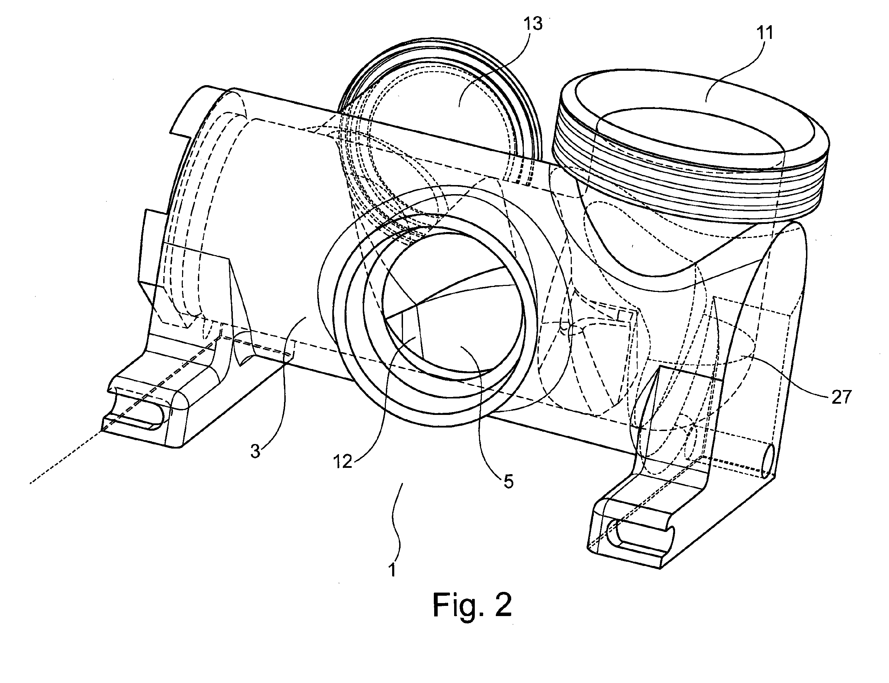

In den Fig. 1 und 2 ist ausschnittsweise eine Lebensmittel-Dispenservorrichtung 1 gezeigt. Diese umfasst ein (Dispenser-) Ventil 2 mit einem, hier aus Metall ausgeführten Gehäuse 3 umfassend eine als Sacklochbohrung realisierte stirnseitige Aufnahmeöffnung 4 für einen rotierbaren Ventilkörper 5. Der Ventilkörper 5 weist ein antriebsseitiges Ende 6 auf, welches bei fertig montierter Vorrichtung wirkverbunden ist mit einem Rotationsantrieb zur Rotation bzw. zum Verschwenken des Ventilkörpers 5 um eine in Richtung der Längserstreckung des Ventilkörpers 5 verlaufende Rotationsachse 7. Ein möglicher Rotationsantrieb zum Rotieren des Ventilkörpers 5 zwischen zwei Schaltstellungen ist an sich bekannt und bevorzugt als Kurbelantrieb ausgebildet, wobei im konkreten Fall in eine stirnseitige Ausnehmung 8 drehfest eine Antriebsplatte (nicht dargestellt) einschiebbar und z.B. durch Verschrauben festlegbar ist, die gelenkig mit einem Antriebsstab verbunden ist, welcher wiederum bevorzugt mit einem Linearantrieb oder einem Rotations-Elektromotor wirkverbunden ist, derart, dass der Ventilkörper 5 innerhalb des Gehäuses 3 verschwenkbar ist, in dem gezeigten Ausführungsbeispiel um 90° hin und her.

Zu erkennen ist, dass der Ventilkörper 5 im Bereich seines antriebsseitigen Endes 6 eine Umfangsnut aufweist, in der eine beispielsweise als O-Ringdichtung ausgebildete Ringdichtung aus Elastomermaterial aufnehmbar ist, um den Ventilkörper 5 gegenüber dem Gehäuse 3 abzudichten, um damit einen axialen Austritt von Lebensmittel durch die Aufnahmeöffnung 4 zu vermeiden. Zu erkennen ist, dass im Bereich des dem antriebsseitigen Ende 6 gegenüberliegenden freien Endes 10 keinerlei Elastomerringdichtung vorgesehen ist.

Zu erkennen ist nun aus einer Zusammenschau der Fig. 1 und 2, dass das Gehäuse 3 (Ventilgehäuse) neben der im Betrieb dauerhaft verschlossenen Aufnahmeöffnung drei weitere Öffnungen aufweist, nämlich eine in dem gezeigten Ausführungsbeispiel endseitige Ansaugöffnung 11, eine Arbeitsöffnung 12 sowie eine Ausgabeöffnung 13. Jeder der Öffnungen 11, 12, 13 ist einem Gehäusestutzen zugeordnet, wobei der Gehäusestutzen der Ansaugöffnung 11 ein Außengewinde trägt, um eine Verbindung zu einem Vorratsbehälter, beispielsweise einem Trichter, einem Tank oder einem sonstigen Behälter herzustellen, aus dem Lebensmittel angesaugt werden kann. Die Arbeitsöffnung 12, die axial zwischen der Ansaugöffnung 11 und der Ausgabeöffnung 13 angeordnet ist, wirkt in an sich bekannter Weise zusammen mit einem Kolben, der bei einem Ansaugtakt entlang einer senkrecht zur Rotationsachse 7 orientierten Achse durch die Arbeitsöffnung 12 Lebensmittel ansaugt und bei einem Gegentakt Lebensmittel ausgibt in Richtung Ausgabeöffnung 13. Unabhängig von dem gezeigten Ausführungsbeispiel ist es bevorzugt die Verstellachse des mindestens einen Kolbens und die Rotationsachse des Ventilkörpers senkrecht zueinander anzuordnen. Der Arbeitsöffnung 12 ist ein vorzugsweise im Zylinder für den Kolben ausgebildeter Zwischenraum zugeordnet, dessen Volumen durch den Hubweg des Kolbens einstellbar ist. Beispielsweise kann die Kolbenanordnung wie in der US 2,032,163 gezeigt realisiert sein.

Der Ventilkörper 5 begrenzt zwei jeweils eine Fluidverbindung bildende Kanäle, nämlich einen ersten Kanal 14, der in dem gezeigten Ausführungsbeispiel endseitig des Ventilkörpers 5 angeordnet ist, und der in der ersten Schaltstellung die Ansaugöffnung 11 mit der axial dazu beabstandeten Arbeitsöffnung 12 verbindet und einen zweiten Kanal 15, der in der zweiten Schaltstellung die Arbeitsöffnung 12 mit der davon axial beabstandeten Ausgabeöffnung 13 verbindet. Beide Kanäle 14, 15 sind als nach außen offene erste bzw. zweite Nut 16, 17 am Außenumfang des Ventilkörpers 5 ausgebildet, wobei die Fluidverbindungen 14, 15 bzw. die diese bildenden Nuten 16, 17 in Bezug auf ihre Längserstreckung sowohl in axialer Richtung als auch in Umfangsrichtung verlaufen.

Der Vollständigkeit halber sei noch in Bezug auf Fig. 2 angemerkt, dass sich dort der Ventilkörper 5 in der zweiten Schaltstellung befindet, in welcher über den zweiten Kanal 14 eine fluidleitende Verbindung von der Arbeitsöffnung 12 zur Ausgabeöffnung 13 hergestellt ist, wobei die gewendelte Längserstreckung des zweiten Kanals 14 bzw. der Nutverlauf sich sowohl axial als auch in Umfangsrichtung fortsetzt, um die axial beabstandeten Öffnungen 12, 13 fluidleitend zum Fördern von Lebensmittel miteinander zu verschieben. In der zweiten Schaltstellung besteht keine Verbindung zwischen der Arbeitsöffnung 12 und der nach oben gerichteten Ansaugöffnung 11. Um nun von der zweiten Schaltstellung in eine erste Schaltstellung zu gelangen, in der der erste Kanal die Ansaugöffnung 11 mit der Arbeitsöffnung 12 verbindet, muss der Ventilkörper um seine Rotationsachse um 90° Grad verdreht werden.

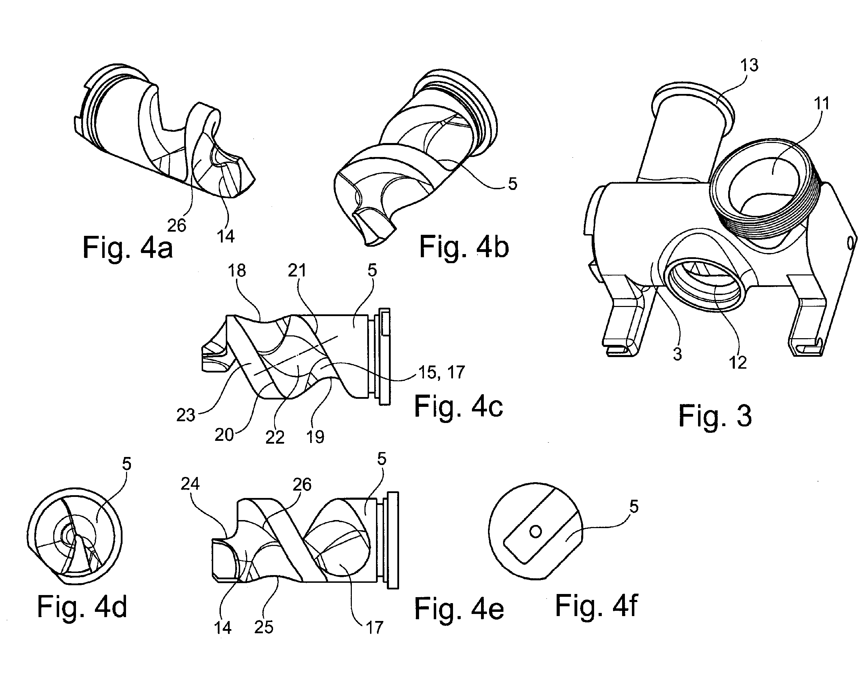

Nun wird anhand der Fig. 4a bis 4f der Aufbau des Ventilkörpers 5 erläutert und sein Zusammenwirken mit den drei Öffnungen 11, 12, 13 in den beiden Schaltstellungen. Wie bereits erwähnt wird der zweite Kanal 15 von einer zweiten Nut 17 gebildet, die einen der Arbeitsöffnung 12 zugeordneten gekrümmten Nutanfang 18 und ein in Richtung der Längserstreckung der Nut beabstandetes zweites Nutende 19 aufweist. Nutanfang 18 und Nutende 19 sind in Umfangsrichtung sowie in axialer Richtung voneinander beabstandet. Die zweite Nut 17 wird in axialer Richtung begrenzt von zwei einander gegenüberliegenden, in dem gezeigten Ausführungsbeispiel parallel zueinander verlaufenden Seitenwänden 20, 21, die über den größten Teil ihrer Längserstreckung entlang der Längserstreckung der Nut 17 gewendelt ausgeführt sind. Zu erkennen ist auch, dass die Seitenwände 20, 21 im Übergangsbereich zu einem Nutgrund 22 der zweiten Nut 17 gekrümmt sind, und zwar in einer senkrecht zur Längserstreckung entlang der eingezeichneten Schnittlinie 23 verlaufenden, nicht dargestellten Schnittansicht.

Der erste, von dem zweiten Kanal 15 getrennte Kanal 14 wird ebenfalls von dem Ventilkörper 5 begrenzt, wobei eine entsprechende Aussparung bzw. Nut einen ersten Nutanfang 24 und ein erstes Nutende 25 aufweist, wobei das Nutende 25 in der ersten Schaltstellung mit der Arbeitsöffnung 12 und der erste Nutanfang 24 mit der Ansaugöffnung 11 zusammenwirkt. Die erste Nut 16, bzw. der erste Kanal 14 wird lediglich in einem Endbereich beidseitig von dem Ventilkörper 5 begrenzt. Im übrigen Bereich wird der erste Kanal 14 nur von einer antriebsseitigen Seitenwand 26 des Ventilkörpers 5 begrenzt und auf der gegenüberliegenden Seite von einem inneren Ende bzw. einer inneren Stirnseite 27 (vgl. Fig. 2) des Gehäuses 3. Der Ventilkörper 5 kann die Ansaugöffnung nicht vollständig überdecken, sondern ist im Bereich der Ansaugöffnung vollumfänglich durchmesserreduziert und endet zudem vor dem axialen Ende der Ansaugöffnung.

Bei einer Verstellbewegung des Ventilkörpers 5 zwischen seinen zwei Schaltstellungen kommen die Nuten 16, 17 bzw. die im Ventilkörper 5 zumindest teilweise ausgebildeten Kanäle 14, 15 gleitend bzw. langsam zur Überdeckung mit den entsprechenden Öffnungen. Mit Blick auf die Öffnungen kommen die Nuten schräg, d.h. durch eine kombinierte Axial- und Umfangsbewegung (relativ zu den Öffnungen) mit diesen zur Deckung. Dies ist zurückzuführen auf die sich sowohl in Umfangsrichtung als auch in axialer Richtung erstreckende Längserstreckung der Fluidkanäle, wodurch die Hindernisse, wie etwa der Finger eines Benutzers langsam zur Seite und insbesondere axial aus der jeweiligen Öffnung herausgedrückt wird, so dass eine Verletzungsgefahr reduziert wird. Gleichzeitig wird in vorteilhafter Weise das Lebensmittel geschont bzw. in einem wesentlich geringeren Maß geschert als dies im Stand der Technik der Fall ist.

Vorgenannte kombinierte rotatorische sowie translatorische Bewegung der Nuten bezieht sich auch insbesondere auf die Nutanfänge 18, 24 und Nutenden 19, 25, genauer auf deren bogenförmig konturierte Abschnitte. Diese Nutenden und Nutanfänge sind gebildet von bzw. weisen auf Scherkanten, die bei herkömmlichen Dispenservorrichtungen zu Verletzungen führen können. Durch die kombinierte rotatorische und translatorische Verstellbewegung trotz der Nutanfänge und Nutenden trotz einer rein rotatorischen Verstellbewegung des Ventilkörpers minimiert diese Verletzungsgefahr.

### Bezugszeichen

- 1: Lebensmittel-Dispenservorrichtung
- 2: Ventil
- 3: (Ventil-) Gehäuse
- 4: Aufnahmeöffnung
- 5: Ventilkörper
- 6: antriebsseitiges Ende
- 7: Rotationsachse
- 8: Aussparung
- 9: Umfangsnut
- 10: freies Ende
- 11: Ansaugöffnung
- 12: Arbeitsöffnung
- 13: Ausgabeöffnung
- 14: erste Fluidverbindung (erster Kanal)
- 15: zweite Fluidverbindung (zweiter Kanal)
- 16: erste Nut
- 17: zweite Nut
- 18: zweiter Nutanfang
- 19: zweites Nutende
- 20: Seitenwand
- 21: Seitenwand
- 22: Nutgrund
- 23: Schnittlinie
- 24: erster Nutanfang
- 25: erstes Nutende
- 26: Seitenwand
- 27: innere Stirnseite

## Patentansprüche

1. Lebensmittel-Dispenservorrichtung, zum Portionieren und Ausgeben von fließfähigen Lebensmitteln, umfassend einen mittels eines Antriebs in einem Zylinder hin- und herbewegbaren Kolben und mit einem einen zwischen einer ersten und einer zweiten Schaltstellung ausschließlich um eine Rotationsachse (7) rotierbar antreibbaren Ventilkörper (5) aufweisenden Ventil (2), wobei in der ersten Schaltstellung mittels eines von dem Ventilkörper (5) begrenzten ersten Kanals (14) eine fluidleitende Verbindung zwischen einer Ansaugöffnung (11) und einer dem Kolben zugeordneten Arbeitsöffnung (12) geschaffen ist, so dass durch einen Arbeitshub des Kolbens Lebensmittels durch die Ansaugöffnung (11) und die Arbeitsöffnung (12) in einen, insbesondere in dem dem Zylinder ausgebildeten, Zwischenraum saugbar ist und wobei in der zweiten Schaltstellung mittels eines von dem Ventilkörpers (5) begrenzten zweiten Kanals (15) eine fluidleitende Verbindung zwischen der Arbeitsöffnung (12) und einer Ausgabeöffnung (13) geschaffen ist, so dass durch einen zweiten Arbeitshub des Kolbens in eine der ersten Axialrichtung entgegengesetzte zweite Axialrichtung Lebensmittel aus dem Zylinder durch die Arbeitsöffnung (12) und die Ausgabeöffnung (13) förderbar ist, wobei
die Ansaugöffnung (11), die Arbeitsöffnung (12) und die Ausgabeöffnung (13) entlang der Rotationsachse (7) des Ventilkörpers (5) versetzt, insbesondere voneinander beabstandet, angeordnet sind,
**dadurch gekennzeichnet,**
**dass** der erste Kanal (14) als außen offene erste Nut (16) ausgebildet ist und dass zumindest eine Seitenwand (20, 21), vorzugsweise beide einander gegenüberliegende Seitenwände (20, 21) der ersten Nut gewendelt ist/sind
und/oder
**dass** der zweite Kanal als außen offene zweite Nut (17) ausgebildet ist, und dass zumindest eine Seitenwand (20, 21), vorzugsweise beide einander gegenüberliegenden Seitenwände (20, 21) der zweiten Nut, gewendelt ist/sind.

2. Dispenservorrichtung nach Anspruch 1,
**dadurch gekennzeichnet,**
**dass** zumindest eine, vorzugsweise beide, von dem rotierbaren Ventilkörper (5) gebildete Seitenwand bzw. Seitenwände (20, 21), die die erste oder die zweite Nut (14, 15) in axialer Richtung begrenzt bzw. begrenzen, über den größten Teil Ihrer Längserstreckung entlang der zugehörigen Nut gewendelt ist bzw. sind.

3. Dispenservorrichtung nach einem der vorhergehenden Ansprüche,
**dadurch gekennzeichnet,**
**dass** zumindest ein Nutende, bevorzugt beide Nutenden, der ersten und/oder zweiten Nut nicht parallel zur Rotationsachse verlaufende Konturabschnitte aufweisen.

4. Dispenservorrichtung nach einem der Ansprüche 1 bis 3,
**dadurch gekennzeichnet,**
**dass** die Ansaugöffnung (11) und die Arbeitsöffnung (12) und/oder die Arbeitsöffnung (12) und die Ausgabeöffnung (13) und/oder die Ansaugöffnung (11) und die Ausgabeöffnung (13) in Umfangsrichtung versetzt, insbesondere beabstandet sind.

5. Dispenservorrichtung nach einem der vorhergehenden Ansprüche,
**dadurch gekennzeichnet,**
**dass** der Ventilkörper (5) zwischen der ersten und der zweiten Schaltstellung um einen Umfangswinkel von weniger als 180°, vorzugsweise von weniger als 120°, vorzugsweise von 90° oder weniger, bevorzugt von mehr als 40 °, rotierbar ist.

6. Dispenservorrichtung nach einem der vorhergehenden Ansprüche,
**dadurch gekennzeichnet,**
**dass** die Ansaugöffnung (11) und die Arbeitsöffnung (12) und die Ausgabeöffnung (13) mantelseitig in einem den Ventilkörper (5) aufnehmenden Ventilgehäuse (3) angeordnet sind, oder dass mindestens eine der vorgenannten Öffnungen (11, 12, 13) mantelseitig in dem Ventilgehäuse (3) und eine andere der vorgenannten Öffnungen (11, 12, 13), insbesondere die Ansaugöffnung (11) oder die Ausgabeöffnung, stirnseitig in dem Ventilgehäuse (3) angeordnet sind/ist.

7. Dispenservorrichtung nach Anspruch 6,
**dadurch gekennzeichnet,**
**dass** die Ansaugöffnung (11), die Arbeitsöffnung (12) und die Ausgabeöffnung (13) die einzige Fluidöffnungsgruppe des Ventilkörpers (5) bilden und der Ventilkörper (5) ausschließlich in einem Bereich zwischen dieser Gruppe und dem Antrieb gegenüber dem Ventilgehäuse (5), insbesondere mittels mindestens einer Ringdichtung abgedichtet ist, oder dass mindestens zwei jeweils drei Öffnungen (11, 12, 13) umfassende Öffnungsgruppen vorgesehen sind, von denen eine eine letzte Gruppe bezogen auf die Axialerstreckung des Ventilgehäuses (5) bildet, die im Bereich des von dem Antrieb des Ventilkörpers (5) abgewandten Ende des Ventilkörpergehäuses (3) angeordnet ist und dass der Ventilkörper (5) nur in einem Bereich axial zwischen der letzten Gruppe und dem Antrieb gegenüber dem Ventilgehäuse, (3) mittels mindestens einer Ringdichtung abgedichtet ist.

8. Dispenservorrichtung nach einem der vorhergehenden Ansprüche,
**dadurch gekennzeichnet,**
**dass** in der ersten Schaltstellung die Arbeitsöffnung (12) nicht fluidleitend mit der Ausgabeöffnung (13) verbunden ist, und dass in der zweiten Schaltstellung die Arbeitsöffnung (12) nicht fluidleitend mit der Ansaugöffnung (11) verbunden ist.

9. Dispersionsvorrichtung nach einem der vorhergehenden Ansprüche,
**dadurch gekennzeichnet,**
**dass** ein Nutende (25) der ersten Nut (16) und ein Nutanfang (18) der zweiten Nut (17) zur alternativen Wechselwirkung mit der Arbeitsöffnung (12) auf der gleichen Axialposition jedoch in Umfangsrichtung beabstandet sind, insbesondere um einen in Umfangsrichtung gemessenen Abstand von mindestens 5mm, vorzugsweise von mindestens 1 cm, ganz besonders bevorzugt um eine Strecke, die mindestens dem Durchmesser der Arbeitsöffnung (12) in Umfangsrichtung entspricht.

10. Dispersionsvorrichtung nach einem der vorhergehenden Ansprüche
**dadurch gekennzeichnet,**
**dass** der erste und der zweite Kanal räumlich fluidisch voneinander getrennt sind, insbesondere über einen, bevorzugt gewendelten Wandabschnitt des Ventilkörpers.

11. Dispersionsvorrichtung nach einem der vorhergehenden Ansprüche
**dadurch gekennzeichnet,**
**dass** zumindest eine Seitenwand (20, 21), zumindest abschnittsweise, bevorzugt über zumindest den größten Teil Ihrer Längserstreckung, vorzugsweise beide einander gegenüberliegenden Seitenwände (20, 21), der ersten und/oder zweiten Nut (16, 17) zumindest in einem Übergangsbereich zu einem Nutgrund (22), insbesondere über ihre gesamte Hocherstreckung, in einer Querschnittsansicht senkrecht zur Nutlängserstreckung gekrümmt konturiert ist/sind.

12. Dispenservorrichtung nach einem der vorhergehenden Ansprüche ,
**dadurch gekennzeichnet,**
**dass** der erste oder der zweite Kanal (14, 15) von einer, insbesondere abgeschrägten, Stirnseite (27) des Ventilkörpers (5) begrenzt ist.

13. Dispenservorrichtung nach einem der vorhergehenden Ansprüche,
**dadurch gekennzeichnet,**
**dass** der erste oder der zweite Kanal (14, 15) von dem Ventilkörper (5) und einer Stirnseite (27) des Ventilgehäuses (3) begrenzt ist.

14. Dispenservorrichtung nach einem der vorhergehenden Ansprüche,
**dadurch gekennzeichnet,**
**dass** der erste oder der zweite Kanal (14, 15) von einem endseitigen Wendeabschnitt des Ventilkörpers und axial gegenüberliegend von dem Ventilgehäuse (3) begrenzt ist.

15. Dispenservorrichtung nach einem der vorhergehenden Ansprüche,
**dadurch gekennzeichnet,**
**dass** der Ventilkörper (5) derart ausgebildet und relativ zu der Ansaugöffnung (11) oder der Ausgabeöffnung (13) angeordnet ist, dass er diese in keiner der beiden Schaltstellungen, vorzugsweise auch nicht bei seiner Verstellbewegung zwischen den Schaltstellungen, vollständig abdeckt.

16. Verfahren zum Portionieren und Ausgeben von fließfähigen Lebensmitteln unter Verwendung einer Vorrichtung nach einem der vorhergehenden Ansprüche, wobei mittels des Kolbens durch in der ersten Schaltstellung des Ventils (2) fließfähiges Lebensmittel durch die Arbeitsöffnung (12) in den Zwischenraum gesaugt wird, wobei das Lebensmittel über den ersten Kanal (14) und die Ansaugöffnung (11) nachströmt und in der zweiten Schaltstellung des Ventils (2) mittels des Kolbens aus dem Zwischenraum durch die Arbeitsöffnung (12) herausgedrückt wird in den zweiten Kanal (15) hinein, durch diesen hindurch bis zur Ausgabeöffnung (13) und durch diese hindurch.

## Claims

1. Food dispenser for portioning and dispensing free-flowing food, comprising a piston which is able to move in a reciprocal manner in a cylinder by means of a drive and having a valve (2) comprising a valve body (5) which can be rotatably driven exclusively about a rotational axis (7) between a first and a second switching position, in the first switching position by means of a first channel (14) delimited by the valve body (5) a fluidic connection being created between a suction opening (11) and a working opening assigned to the piston (12), such that by means of a working stroke of the piston, food is able to be suctioned through the suction opening (11) and the working opening (12) into an intermediate space, which in particular is formed in the cylinder, and in the second switching position by means of a second channel (15) delimited by the valve body (5), a fluidic connection being created between the working opening (12) and a dispensing opening (13) such that by means of a second working stroke of the piston in a second axial direction counter to the first axial direction, food is able to be conveyed from the cylinder through the working opening (12) and the dispensing opening (13),
the suction opening (11), the working opening (12) and the dispensing opening (13) being arranged offset, in particular spaced apart from one another, along the rotational axis (7) of the valve body (5),
**characterised in that**
the first channel (14) is configured as an outwardly open first groove (16) and **in that** at least one side wall (20, 21), preferably both opposing side walls (20, 21), of the first groove is/are helical
and/or
**in that** the second channel is configured as an outwardly open second groove (17) and **in that** at least one side wall (20, 21), preferably both opposing side walls (20, 21), of the second groove is/are helical.

2. Dispenser according to Claim 1,
**characterised in that**
at least one, preferably both, side wall(s) (20, 21) formed by the rotatable valve body (5), which define(s) the first or the second groove (14, 15) in the axial direction, is and/or are helical over the largest part of their longitudinal extent along the associated groove.

3. Dispenser according to one of the preceding claims,
**characterised in that**
at least one groove end portion preferably both groove end portions of the first and/or the second groove have contour portions not extending parallel to the rotational axis.

4. Dispenser according to one of Claims 1 to 3,
**characterised in that**
the suction opening (11) and the working opening (12) and/or the working opening (12) and the dispensing opening (13) and/or the suction opening (11) and the dispensing opening (13) are offset in the peripheral direction, in particular spaced apart.

5. Dispenser according to one of the preceding claims,
**characterised in that**
the valve body (5) is able to be rotated between the first and the second switching positions by a peripheral angle of less than 180°, preferably of less than 120°, preferably of 90° or less, preferably of more than 40°.

6. Dispenser according to one of the preceding claims,
**characterised in that**
the suction opening (11) and the working opening (12) and the dispensing opening (13) are arranged on the outer face in a valve housing (3) receiving the valve body (5), or **in that** at least one of the aforementioned openings (11, 12, 13) is arranged on the outer face in the valve housing (3) and another of the aforementioned openings (11, 12, 13), in particular the suction opening (11) or the dispensing opening, is arranged on the front face in the valve housing (3).

7. Dispenser according to Claim 6,
**characterised in that**
the suction opening (11), the working opening (12) and the dispensing opening (13) form the only fluid opening group of the valve body (5) and the valve body (5) is exclusively sealed in a region between this group and the drive relative to the valve housing (5), in particular by means of at least one annular seal, or **in that** at least two opening groups respectively comprising three openings (11, 12, 13) are provided, one thereof forming a last group relative to the axial extent of the valve housing (5), said group being arranged in the region of the end of the valve body housing (3) remote from the drive of the valve body (5) and **in that** the valve body (5) is axially sealed only in a region between the last group and the drive relative to the valve housing (3) by means of at least one annular seal.

8. Dispenser according to one of the preceding claims,
**characterised in that**
in the first switching position the working opening (12) is not fluidically connected to the dispensing opening (13) and **in that** in the second switching position the working opening (12) is not fluidically connected to the suction opening (11).

9. Dispenser according to one of the preceding claims,
**characterised in that**
a groove end portion (25) of the first groove (16) and an initial groove portion (18) of the second groove (17) for alternate interaction with the working opening (12) are at the same axial position but spaced apart in the peripheral direction, in particular by a distance measured in the peripheral direction of at least 5 mm, preferably of at least 1 cm, quite particularly preferably by a distance which corresponds at least to the diameter of the working opening (12) in the peripheral direction.

10. Dispenser according to one of the preceding claims,
**characterised in that**
the first and the second channel are spatially separated fluidically from one another in particular via a wall portion of the valve body which is preferably helical.

11. Dispenser according to one of the preceding claims,
**characterised in that**
at least one side wall (20, 21) at least partially, preferably over at least the largest part of its longitudinal extent, preferably both opposing side walls (20, 21) of the first and/or second groove (16, 17) is/are contoured in a curved manner at least in a transition region with a groove base (22), in particular over its entire vertical extent, in a cross-sectional view perpendicular to the longitudinal extent of the groove.

12. Dispenser according to one of the preceding claims,
**characterised in that**
the first or the second channel (14, 15) is delimited by a front face (27) of the valve body (5) which is, in particular, chamfered.

13. Dispenser according to one of the preceding claims,
**characterised in that**
the first or the second channel (14, 15) is delimited by the valve body (5) and a front face (27) of the valve housing (3).

14. Dispenser according to one of the preceding claims,
**characterised in that**
the first or the second channel (14, 15) is delimited by a helical portion of the valve body on the end face and in an axially opposing manner by the valve housing (3).

15. Dispenser according to one of the preceding claims,
**characterised in that**
the valve body (5) is configured and arranged relative to the suction opening (11) or the dispensing opening (13) such that it does not completely cover said openings in either of the two switching positions,
and preferably not during its displacement movement between the switching positions.

16. Method for portioning and dispensing free-flowing food by using a device according to one of the preceding claims, free-flowing food being suctioned by means of the piston through the working opening (12) into the intermediate space in the first switching position of the valve (2), the food flowing via the first channel (14) and the suction opening (11), and in the second switching position of the valve (2) being forced out of the intermediate space by means of the piston through the working opening (12) into the second channel (15), through said channel as far as the dispensing opening (13) and through said dispensing opening.

## Revendications

1. Dispositif de distribution d'aliments, destiné à la mise en portions et à la distribution d'aliments coulants, comportant un piston pouvant être animé d'un mouvement de va-et-vient dans un cylindre au moyen d'un entraînement et pourvu d'une soupape (2) comprenant un corps de soupape (5) pouvant être entraîné en rotation exclusivement autour d'un axe de rotation (7) entre une première et une deuxième position de commutation, une liaison fluidique étant produite entre une ouverture d'aspiration (11) et une ouverture de travail (12) associée au piston dans la première position de commutation au moyen d'un premier canal (14) délimité par le corps de soupape (5), de telle sorte qu'au moyen d'une course de travail du piston, l'aliment puisse être aspiré, à travers l'ouverture d'aspiration (11) et l'ouverture de travail (12), dans un espace intermédiaire réalisé en particulier dans le cylindre et, dans la deuxième position de commutation, une liaison fluidique étant produite entre l'ouverture de travail (12) et une ouverture de distribution (13) au moyen d'un deuxième canal (15) délimité par le corps de soupape (5), de telle sorte qu'au moyen d'une deuxième course de travail du piston, l'aliment puisse être transporté dans un deuxième sens axial opposé au premier sens axial hors du cylindre à travers l'ouverture de travail (12) et l'ouverture de distribution (13),
l'ouverture d'aspiration (11), l'ouverture de travail (12) et l'ouverture de distribution (13) étant disposées de manière décalée, en particulier de manière espacée les unes des autres, le long de l'axe de rotation (7) du corps de soupape (5),
**caractérisé en ce que**
le premier canal (14) est réalisé sous forme de première rainure (16) ouverte vers l'extérieur, et **en ce qu'**au moins une paroi latérale (20, 21), de préférence les deux parois latérales (20, 21) en regard l'une de l'autre, de la première rainure est/sont spiralée(s),
et/ou
**en ce que** le deuxième canal est réalisé sous forme de deuxième rainure (17) ouverte vers l'extérieur, et **en ce qu'**au moins une paroi latérale (20, 21), de préférence les deux parois latérales (20, 21) en regard l'une de l'autre, de la deuxième rainure est/sont spiralée(s).

2. Dispositif de distribution selon la revendication 1,
**caractérisé en ce**
**qu'**au moins une paroi latérale, de préférence les deux parois latérales (20, 21), formée(s) par le corps de soupape rotatif (5), qui délimite ou délimitent la première ou la deuxième rainure (14, 15) dans la direction axiale, est ou sont spiralée(s) sur la majeure partie de son/leur étendue longitudinale le long de la rainure associée.

3. Dispositif de distribution selon l'une quelconque des revendications précédentes,
**caractérisé en ce**
**qu'**au moins une extrémité de rainure, de préférence les deux extrémités de rainure, de la première et/ou de la deuxième rainure présente(nt) des portions de contour ne s'étendant pas parallèlement à l'axe de rotation.

4. Dispositif de distribution selon l'une quelconque des revendications 1 à 3,
**caractérisé en ce que**
l'ouverture d'aspiration (11) et l'ouverture de travail (12) et/ou l'ouverture de travail (12) et l'ouverture de distribution (13) et/ou l'ouverture d'aspiration (11) et l'ouverture de distribution (13) sont décalées, en particulier espacées, dans la direction périphérique.

5. Dispositif de distribution selon l'une quelconque des revendications précédentes,
**caractérisé en ce que**
le corps de soupape (5) est rotatif entre la première et la deuxième position de commutation d'un angle périphérique de moins de 180°, de préférence de moins de 120°, de préférence de 90° ou moins, de préférence de plus de 40°.

6. Dispositif de distribution selon l'une quelconque des revendications précédentes,
**caractérisé en ce que**
l'ouverture d'aspiration (11), l'ouverture de travail (12) et l'ouverture de distribution (13) sont disposées, du côté enveloppe, dans un boîtier de soupape (3) recevant le corps de soupape (5), ou **en ce qu'**au moins l'une des ouvertures (11, 12, 13) susmentionnées est disposée, du côté enveloppe, dans le boîtier de soupape (3) et une autre des ouvertures (11, 12, 13) susmentionnées, en particulier l'ouverture d'aspiration (11) ou l'ouverture de distribution, est disposée, du côté frontal, dans le boîtier de soupape (3).

7. Dispositif de distribution selon la revendication 6,
**caractérisé en ce que**
l'ouverture d'aspiration (11), l'ouverture de travail (12) et l'ouverture de distribution (13) forment le seul groupe d'ouvertures de fluide du corps de soupape (5) et le corps de soupape (5) est rendu étanche par rapport au boîtier de soupape (5) exclusivement dans une région entre ce groupe et l'entraînement, en particulier au moyen d'au moins un joint d'étanchéité annulaire, ou **en ce que** des groupes d'ouvertures comportant au moins deux, respectivement trois, ouvertures (11, 12, 13) sont prévus, parmi lesquels l'un forme un dernier groupe par rapport à l'étendue axiale du boîtier de soupape (5), lequel dernier groupe est disposé dans la région de l'extrémité du boîtier de corps de soupape (3) opposée à l'entraînement du corps de soupape (5), et **en ce que** le corps de soupape (5) n'est rendu étanche par rapport au boîtier de soupape (3), au moyen d'au moins un joint d'étanchéité annulaire, que dans une région axialement entre le dernier groupe et l'entraînement.

8. Dispositif de distribution selon l'une quelconque des revendications précédentes,
**caractérisé en ce que**,
dans la première position de commutation, l'ouverture de travail (12) n'est pas en liaison fluidique avec l'ouverture de distribution (13), et **en ce que**, dans la deuxième position de commutation, l'ouverture de travail (12) n'est pas en liaison fluidique avec l'ouverture d'aspiration (11).

9. Dispositif de distribution selon l'une quelconque des revendications précédentes,
**caractérisé en ce**
**qu'**une extrémité de rainure (25) de la première rainure (16) et un début de rainure (18) de la deuxième rainure (17) sont, pour l'interaction en alternance avec l'ouverture de travail (12), à la même position axiale mais espacés dans la direction périphérique, en particulier d'une distance, mesurée dans la direction périphérique, d'au moins 5 mm, de préférence d'au moins 1 cm, de manière tout particulièrement préférée d'une distance qui correspond au moins au diamètre de l'ouverture de travail (12) dans la direction périphérique.

10. Dispositif de distribution selon l'une quelconque des revendications précédentes,
**caractérisé en ce que**
le premier et le deuxième canal sont séparés fluidiquement l'un de l'autre dans l'espace, en particulier par le biais d'une portion de paroi, de préférence spiralée, du corps de soupape.

11. Dispositif de distribution selon l'une quelconque des revendications précédentes,
**caractérisé en ce**
**qu'**au moins une paroi latérale (20, 21), au moins par portions, de préférence sur au moins la majeure partie de son étendue longitudinale, de préférence les deux parois latérales (20, 21) en regard l'une de l'autre, de la première et/ou de la deuxième rainure (16, 17) est/sont profilée(s) de manière courbée dans une vue en section transversale perpendiculairement à l'étendue longitudinale de rainure, en particulier sur toute son/leur étendue en hauteur, au moins dans une région de transition vers un fond de rainure (22).

12. Dispositif de distribution selon l'une quelconque des revendications précédentes,
**caractérisé en ce que**
le premier ou le deuxième canal (14, 15) est délimité par un côté frontal (27), en particulier biseauté, du corps de soupape (5).

13. Dispositif de distribution selon l'une quelconque des revendications précédentes,
**caractérisé en ce que**
le premier ou le deuxième canal (14, 15) est délimité par le corps de soupape (5) et un côté frontal (27) du boîtier de soupape (3).

14. Dispositif de distribution selon l'une quelconque des revendications précédentes,
**caractérisé en ce que**
le premier ou le deuxième canal (14, 15) est délimité une portion de retournement d'extrémité du corps de soupape et, de manière opposée axialement, par le boîtier de soupape (3).

15. Dispositif de distribution selon l'une quelconque des revendications précédentes,
**caractérisé en ce que**
le corps de soupape (5) est réalisé et disposé par rapport à l'ouverture d'aspiration (11) ou à l'ouverture de distribution (13) de telle sorte qu'il ne recouvre complètement celle-ci dans aucune des deux positions de commutation, de préférence pas non plus lors de son mouvement de réglage entre les positions de commutation.

16. Procédé de mise en portions et de distribution d'aliments coulants en utilisant un dispositif selon l'une quelconque des revendications précédentes, un aliment coulant étant aspiré dans l'espace intermédiaire à travers l'ouverture de travail (12) au moyen du piston dans la première position de commutation de la soupape (2), l'aliment continuant à s'écouler par le biais du premier canal (14) et de l'ouverture d'aspiration (11) et, dans la deuxième position de commutation de la soupape (2), étant poussé au moyen du piston hors de l'espace intermédiaire à travers l'ouverture de travail (12), jusque dans le deuxième canal (15), à travers celui-ci jusqu'à l'ouverture de distribution (13) et à travers celle-ci.
